(19) Europäisches Patentamt
European Patent Office
Office européen des brevets

(11) Publication number: 0 135 973
B1

(12) EUROPEAN PATENT SPECIFICATION

(45) Date of publication of patent specification: 30.09.87

(51) Int. Cl.$^4$: C 08 F 10/00, C 08 F 4/64

(21) Application number: 84201352.6

(22) Date of filing: 19.09.84

# (54) Olefin polymerization catalyst components and polymerization process.

(30) Priority: 20.09.83 US 534016
13.10.83 US 541625

(43) Date of publication of application:
03.04.85 Bulletin 85/14

(45) Publication of the grant of the patent:
30.09.87 Bulletin 87/40

(84) Designated Contracting States:
AT BE CH DE FR GB IT LI NL SE

(56) References cited:
EP-A-0 007 565
EP-A-0 019 330
GB-A-1 550 195

(73) Proprietor: SHELL INTERNATIONALE RESEARCH MAATSCHAPPIJ B.V.
Carel van Bylandtlaan 30
NL-2596 HR Den Haag (NL)

(72) Inventor: Job, Robert Charles
12126 Westmere
Houston Texas 77077 (US)
Inventor: Nozaki, Kenzie
2539 Tamalpais Avenue
El Cerrito California 94530 (US)

(74) Representative: Aalbers, Onno et al
P.O. Box 302
NL-2501 CH The Hague (NL)

EP 0 135 973 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to olefin polymerization catalyst components comprising a magnesium halide and a titanium halide and to a process for the polymerization of olefins using such catalyst components.

It is known to provide olefin polymerization catalysts by combining a solid component comprising magnesium, titanium and chlorine with an activating organoaluminium compound. The activity and stereospecific performance of such compositions is ensured by incorporating an electron donor in the solid component and by employing as a third catalyst component an aromatic ester which may be complexed with the activating organoaluminium compound.

For convenience of reference, the solid titanium-containing component of such catalysts is referred to herein as "procatalyst", the organoaluminium, compound, whether used separately or partially or totally complexed with an electron donor, as "cocatalyst", and the electron donor compound, whether used separately or partially or totally complexed with the organoaluminium compound, as "selectivity control agent" (SCA).

Among the methods of preparing procatalysts, a distinction may be made between those in which the starting material is a magnesium chloride and those in which magnesium chloride is produced by halogenation of an organic compound in the course of the procatalyst synthesis.

Procatalyst of the latter type have been disclosed in European Patent 19,330. These procatalysts are i.a. prepared by halogenating a magnesium compound MgR′R″ (wherein R′ and R″ are, alkoxide or aryloxide groups and R″ may also be a halogen) by reaction with a halide of tetravalent titanium in the presence of an electron donor and a halohydrocarbon followed by contact of the halogenated product with a tetravalent titanium compound.

This invention provides still further improvements of the catalysts and processes of the prior art. Catalysts which comprise the solid titanium-containing catalyst constituents of this invention in combination with an organoaluminium cocatalyst and a selectivity control agent or with an at least partial reaction product of an organoaluminium compound and a selectivity control agent the latter procatalysts are capable of producing polypropylene of commercially desired isotacticity at a high productivity, expressed in terms of g polymer produced per g catalyst (g pol/g cat). However, the productivity, expressed in terms of g polymer produced per g titanium (g pol/gTi) still leaves improvement to be desired.

This invention provides a process for producing an olefin polymerization catalyst component comprising

a) halogenating a magnesium compound of the formula MgR′R″ where R′ is an alkoxide or aryloxide group and R″ is an alkoxide or aryloxide group or halogen, with a tetravalent titanium halide in the presence of a halohydrocarbon and an electron donor, therein forming a halogenated product;

b) contacting said halogenated product with thionylchloride or with an acid halide of the formula

$$\mathrm{A{-}\overset{\overset{\textstyle O}{\|}}{C}{-}X}$$

where A is an alkyl, aryl, substituted alkyl, or substituted aryl group and X is a halide at a temperature of about 40 to about 140°C;

c) contacting said halogenated product with a tetravalent titanium halide at a temperature of about 40 to about 140°C, either simultaneously with or subsequent to contacting step b).

The first step in preparing the procatalysts of the present invention comprises halogenating a magnesium compound of the formula MgR′R″ where R′ is an alkoxide or aryloxide group and R″ is an alkoxide or aryloxide group or halogen, with a tetravalent titanium halide in the presence of a halohydrocarbon and an electron donor, therein forming a halogenated product.

Examples of halogen containing magnesium compounds that can be used as starting materials for the halogenating reaction are alkoxy and aryloxy magnesium halides, such as isobutoxy magnesium chloride, ethoxy magnesium bromide, phenoxy magnesium iodide, cumyloxy magnesium bromide and naphtenoxy magnesium chloride.

Preferred magnesium compounds to be halogenated are selected from magnesium dialkoxides and magnesium diaryloxides. In such componds the alkoxide groups suitable have from 1 to 8 carbon atoms, and preferably from 2 to 8 carbon atoms. Examples of these groups of compounds are magnesium di-isopropoxide, magnesium diethoxide, magnesium dibutoxide, magnesium diphenoxide, magnesium dinaphthenoxide, and ethoxy magnesium isobutoxide. Magnesium diethoxide and magnesium ethoxychloride are preferred.

In the halogenation with a halide of tetravalent titanium, the magnesium compounds are preferably reacted to form a magnesium halide in which the atomic ratio of halogen to magnesium is at least 1.5. The most preferred reactions are those leading to fully halogenated reaction products. Such halogenation reactions are suitably effected by employing a molar ratio of magnesium compound to titanium compound of 0.005:1 to 2:1, preferably 0.01:1 to 1:1. These reactions are conducted in the additional presence of a halohydrocarbon and an electron donor. An inert hydrocarbon diluent or solvent may also be present. When using an inert diluent or solvent, this should of course not be used as a complete substitute for the halohydrocarbon.

Suitable halides of tetravalent titanium include aryloxy- or alkoxy-di- and -trihalides, such as dehexanoxy-titanium dichloride, diethoxy-titanium dibromide, isopropoxy-titanium tri-iodide and phenoxytitanium trichloride; titanium tetrahalides are preferred; most preferred is titanium tetrachloride.

Suitable halohydrocarbons are compounds comprising carbon halogen and optionally hydrogen, but no other atoms, e.g. chlorohydrocarbons such as butyl chloride, amyl chloride and the following more preferred compounds. Preferred aliphatic halohydrocarbons are halogen-substituted hydrocarbons with 1 to 12, particularly less than 9, carbon atoms per molecule, comprising at least two halogen atoms, such as trichloromethane, 1,2-dichloroethane, dichlorobutane, 1,1,3-trichloroethane, trichlorocyclohexane, dichlorofluoroethane, trichloropropane, trichlorofluorooctane, hexachloroethane and tetrachloroiso-octane. Carbon tetrachloride and 1,1,3-trichloroethane are preferred aliphatic halohydrocarbons. Aromatic halohydrocarbons may also be employed, e.g., chlorobenzene, bromobenzene, dichlorobenzene, dichloro-dibromobenzene, naphthyl chloride, chlorotoluene, dichlorotoluenes, chlorobenzene and dichlorobenzene are preferred aromatic halohydrocarbons. Chlorobenzene is the most preferred halohydrocarbon.

The halogenation normally proceeds under formation of a solid reaction product which may be isolated from the liquid reaction medium by filtration, decantation or another suitable method and may be subsequently washed with an inert hydrocarbon diluent, such as n-hexane, iso-octane or toluene, to remove any unreacted material, including physically absorbed halohydrocarbon.

The above halogenated product is then treated with thionylchloride or with a particular acid halide prior to or concurrent with treatment with a tetravalent titanium halide.

Acid halides employed herein have the formula

$$A-\overset{\overset{\displaystyle O}{\|}}{C}-X$$

where A is an alkyl, aryl, substituted alkyl or substituted aryl group and X is a halide. Preferably, A is a phenyl group and X is chloride. Accordingly, the preferred acid halide is benzoyl chloride.

The acid halide treatment results in an increase of the productivity of the procatalysts, measured as g pol/g Ti. The amount of thionylchloride or acid halide employed is 50 to 200 mmol per mole of Mg and preferably less than the total equivalent amount of residual alkoxide contained in the halogenated magnesium compound. Suitably, the treatment is carried out at a temperature of 40 to 140°C during 0.1 to 4 hours. Particularly preferred contacting temperatures are from 60 to 110°C and the most preferred contacting periods are 0.3 to 1 hour. The use of acid halides is more preferred than that of thionylchloride.

The product is also contacted with a tetravalent titanium compound such as a dialkoxy-titanium dihalide, alkoxy-titanium trihalide, phenoxy-titanium trihalide or titanium tetrahalide. The most preferred titanium compounds are titanium tetrahalides and especially titanium tetrachloride. This treatment increases the content of titanium tetrachloride in the solid catalyst component. This increase should preferably be sufficient to achieve a final atomic ratio of tetravalent titanium to magnesium in the solid catalyst component of from 0.005 to 3.0, particularly of from 0.02 to 1.0. To this purpose the contacting with the tetravalent titanium compound is most suitably carried out at a temperature of from 60 to 136°C during 0.1—6 hours, optionally in the presence of an inert hydrocarbon diluent. Particularly preferred contacting temperatures are from 70 to 120°C and the most preferred contacting periods are in between 0.5 to 3.5 hours. The treatment preferably follows the treatment with thionylchloride or acid halide and it may be carried out in successive contacts of the solid with separate portions of $TiCl_4$.

After the treatment with tetravalent titanium compound the catalyst component is suitably isolated from the liquid reaction medium and preferably washed to remove unreacted titanium compound. The titanium content of the final, washed catalyst constituent is suitably between about 1.5 to 3.6 percent by weight or up to about 4.5 percent.

The preferred halogen atom, possibly contained in the magnesium compound to be halogenated, and contained in the titanium compound which serves as halogenating agent and in the tetravalent titanium compound with which the halogenated product is contacted, is chlorine.

Suitable electron donors, which in this invention are used in combination with or reacted with an organoaluminium compound as selectivity control agents and which are also used in the preparation of the solid catalyst component are ethers, esters, ketones, phenols, amines, amides, imines, nitriles, phosphines, phosphites, stibines, arsines, phosphoramides and alcoholates. Examples of suitable donors are those referred to in U.S. Patent 4,136,243 or its equivalent British Specification 1,486,194 and in British Specification 1,554,340 or its equivalent German Offenlegungsschrift 2,729,126. Preferred donors are esters and diamines, particularly esters of aromatic carboxylic acids, such as ethyl and methyl benzoate, p-methoxy ethyl benzoate, p-ethoxy ethyl benzoate, ethyl acrylate, methyl methacrylate, ethyl acetate, dimethyl carbonate, dimethyl adipate, dihexyl fumarate, dibutyl maleate, ethylisopropyl oxalate, p-chloro ethyl benzoate, p-amino hexyl benzoate, isopropyl naphthenate, n-amyl toluate, ethyl cyclohexanoate, propyl pivalate, N,N,N',N'-tetramethylethylene diamine, 1,2,4-trimethyl piperazine, 2,3,4,5-tetramethyl piperidine and similar compounds. The donor used as selectivity control agent in the catalyst may be the same as or different from the donor used for preparing the titanium containing catalyst component. Preferred electron donors for use in preparing the titanium constituent are ethyl benzoate and p-methyl

toluate. Preferred as selectivity control agent in the catalyst are p-methoxy ethyl benzoate and p-ethoxy ethyl benzoate.

The organoaoluminium compound to be employed as cocatalyst may be chosen from any of the known activators in olefin polymerization catalyst systems comprising a titanium halide but is most suitably free of halogens. While aluminium trialkyl compounds, dialkylaluminium halides and dialkylaluminium alkoxides may be used, aluminiumtrialkyl compounds are preferred, particularly those wherein each of the alkyl groups has 2 to 6 carbon atoms, e.g., aluminiumtriethyl, aluminium-tri-n-propyl, aluminiumtri-isobutyl, aluminiumtri-isopropyl and aluminiumdibutyl-n-amyl.

Preferred proportions of selectivity control agent, employed separately, in combination with, or reacted with an organoaluminium compound, calculated as mol per mol aluminium compound, are in the range from 0.1 to 1.5, particularly from 0.2 to 0.5.

Proportions of electron donor contained in the solid catalyst component, calculated as mol per mol of magnesium, are suitably in the range of from 0.01 to 10, e.g., from 0.05 to 10 and from 0.1 to 5.0 and especially from 0.8 to 2.2.

To prepare the final polymerization catalyst composition, procatalyst, cocatalyst and selectivity control agent, if used separately, may be simply combined, most suitably employing a molar ratio to produce in the final catalyst an atomic ratio of aluminium to titanium of from 1 to 150, and preferably from 30 to 80.

Improved procatalysts prepared according to this invention are useful in the same types of polymerization of alpha-mono-olefins in which the unimproved procatalysts are useful. The catalysts may be employed in the polymerization or copolymerization of alpha-monoolefins of 2 to 8 carbon atoms per molecule, conducted at conditions known for the polymerization of the respective olefins when using $MgCl_2$-supported coordination catalysts.

Polymerization of propylene as sole olefin feed or in combination with small amounts, e.g., from 1 to 20 mole percent, of ethylene, 1-butene or other alpha olefin comonomer, may be conducted with the catalysts of the invention, in a liquid system with an inert diluent such as a paraffinic liquid of 3 to 15 carbon atoms per molecule, or in a liquid system containing propylene as sole diluent or together with a small amount of propane, or in vapour phase. Propylene polymerization in liquid phase is conducted at temperatures of 50 to 80°C and at a pressure sufficient to maintain liquid conditions.

Olefin polymerization may also be conducted as a solution process in which the polymer is produced as a solution in monomer or diluent. Such a process is preferred in the polymerization of 1-butene as described, for example, in U.S. Patent 3,362,940.

In the following Examples the selectivity to isotactic polypropylene is determined by measuring the amount of xylene soluble polymer (XS), in accordance with regulations of the U.S. Food and Drug Administration. The XS test is carried out as follows: the sample is completely dissolved in xylene in a stirred flask by heating under reflux at 120°C. The flask is then immersed in a water bath at 25°C without stirring for one hour, during which the insoluble portion precipitates. The precipitate is filtered off and the solubles present in the filtrate are determined by evaporating a 20 ml aliquot of the filtrate, drying the residue under vacuum, and weighing the residue. The xylene-solubles consist of amorphous material with some low molecular weight crystalline material. (FDA regulations 121.2501 and 121.2510, 1971).

The numerical value of XS in the case of propylene homopolymer is typically about 2 percent greater than the amount of polymers extractable in refluxing n-heptane. Thus the isotacticity index of polypropylene (amount insoluble in refluxing n-heptane) is approximately 100-(XS-2).

Catalyst productivity at standard conditions exhibits an inverse relationship with stereoselectivity. This relationship is characteristic for any given procatalyst. It is generally possible to control these variables, within limits, by changing the proportion of selectivity control agent (SCA). Increasing the amount of SCA increases selectivity to isotactic or stereoregular polymer but reduces activity, and hence productivity in a standard one hour test. The relationship in propylene polymerization is such that a decrease of 1% of XS, e.g., from 5 to 4, corresponds approximately to a decrease in productivity of 160 kg pol/gTi. For purposes of comparison, the following examples of the invention in propylene polymerization show not only the measured data but productivity normalized to 4% wt. XS.

Examples

1. Magnesium ethoxide (5.72 g, 50 mmol) was stirred at room temperature with ethyl benzoate (2.4 ml, 16.7 mmol) and 75 ml of chlorobenzene as titanium tetrachloride (75 ml, 680 mmol) was added over the course of 10 min. The mixture was brought to 110°C and stirred for 60 min then filtered hot. The resulting solid ("S") was slurried in chlorobenzene (60 ml) containing benzoyl chloride (0.31 ml, 2.7 mmol) and held at 110°C for 20 min. then filtered hot. The resulting solid was washed for 10 minutes each with two 60 ml portions of $TiCl_4$ at 110°C and filtered hot. The resulting solid was washed at room temperature with six 150 ml portions of isopentane then dried under moving nitrogen at 40°C. Yield 5.77 g of procatalyst "A".

2. Procatalyst "B" was prepared by essentially the same procedure except that the benzoyl chloride treatment was carried out for 60 min at 110°C and that the two succeeding 110°C $TiCl_4$ washes were with only 40 ml of titanium tetrachloride. Yield 6.5 g.

3. Magnesium ethoxide (5.72 g, 50 mmol) was stirred at room temperature with benzoyl chloride (1.8 ml, 15.6 mmol) and 75 ml of chlorobenzene as titanium tetrachloride (75 ml, 680 mmol) was added over the course of 10 min. The mixture was brought to 100°C and stirred for 180 min then filtered hot. The resulting

solid was slurried in 40 ml of chlorobenzene and held at 100°C for 120 min. then filtered hot. The resulting solid was slurried in titanium tetrachloride (40 ml) containing benzoyl chloride (0.6 ml, 5.2 mmol) and held at 100°C for 120 min then filtered hot. The resulting solid was washed at room temperature with seven 150 ml portions of isopentane then dried under moving nitrogen at 40°C for 100 min. Yield 5.82 g of procatalyst "C".

4. Solid "S", as prepared in example 1, was slurried in 40 ml of titanium tetrachloride and held at 110°C for 60 min. then filtered hot. The resulting solid was slurried in 40 ml of titanium tetrachloride containing benzoyl chloride (0.4 ml, 3.5 mmol) and held at 110°C for 60 min. then filtered hot. The resulting solid was washed, at room temperature, with six 150 ml portions of isopentane then dried under moving nitrogen at 40°C. Yield 6.2 g of procatalyst "D".

5. Solid "S", as prepared in Example 1, was treated with $SOCl_2$ (0.49 g) in chlorobenzene at 80°C during 1 hr then filtered hot. The resulting solid was slurried in titanium tetrachloride (40 ml) and held at 110°C for 5 min, then filtered hot and then washed with seven 150 ml portions of isopentane at room temperature, then dried under nitrogen at 40°C for 100 min. Yield 6.2 g of procatalyst "E".

6. (Control) Solid "S", as prepared in example 1, was treated three times with 40 ml of $TiCl_4$, held at 110°C for 10 min. each and filtered hot. The resulting solid was washed, at room temperature, with six 150 ml portions of isopentane then dried under moving nitrogen at 40°C for 100 min. Yield 6.32 g of procatalyst "F".

About 1400 g of liquid propylene and 132 mmol of hydrogen in a one gallon (about 4 liter) autoclave equipped with an agitator, was heated to 60°C under sufficient pressure to maintain it in liquid phase. A predetermined amount (0.18—0.22 mmol) of p-ethyl anisate and 2.5 ml (0.7 mmol) of triethyl aluminium as a 5% wt solution in $C_7$—$C_8$ paraffin diluent were then successively added to the propylene. To the agitated mixture there was added a sufficient amount of the slurry of procatalyst in mineral oil to provide about 0.01 milliatoms of titanium.

The mixture was agitated and maintained at 67°C for one hour. The pressure was then released and powdered polypropylene was recovered.

For the six examples the xylene solubles were analyzed to be from 3.8 to 4.8%. For convenience of comparison the measured productivities were corrected to equivalent productivities at 4% xylene solubles by using the afore-mentioned, experimentally determined ratio of 160 kg pol/g Ti/%XS.

| Procatalyst | Productivity Kg pol/g Ti |
|---|---|
| A | 976 |
| B | 950 |
| C | 1040 |
| D | 994 |
| E | 928 |
| F x | 790 |

x for comparison

**Claims**

1. A process for producing an olefin polymerization catalyst component comprising

a) halogenating a magnesium compound of the formula MgR′R″ where R′ is an alkoxide or aryloxide group and R″ is an alkoxide or aryloxide group or halogen, with a tetravalent titanium halide in the presence of a halohydrocarbon and an electron donor, therein forming a halogenated product;

b) contacting said halogenated product with thionylchloride or with an acid halide of the formula

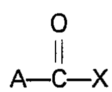

where A is an alkyl, aryl, substituted alkyl, or substituted aryl group and X is a halide at a temperature of about 40 to about 140°C;

c) contacting said halogenated product with a tetravalent titanium halide at a temperature of about 40 to about 140°C, either simultaneously with or subsequent to contacting step b).

2. A process as claimed in claim 1 wherein said magnesium compound is a magnesium dialkoxide.

3. A process as claimed in claim 1 wherein said halohydrocarbon is a chlorohydrocarbon.

4. A process as claimed in claim 1 wherein said acid halide is an acid chloride.

5. A process as claimed in claim 1 wherein said electron donor is an aromatic carboxylic acid ester.

6. A process as claimed in claim 1 wherein said magnesium compound is magnesium diethoxide, said halohydrocarbon is chlorobenzene, said titanium halide is titanium tetrachloride, said electron donor is ethylbenzoate, and said acid chloride is benzoyl chloride.

7. An olefin polymerization catalyst composition comprising an organoaluminium compound, and electron donor, and the catalyst component produced by a process as claimed in any of claims 1 to 6, in which the atomic ratio of aluminium to titanium is from 30:1 to 80:1.

8. A process for the catalytic polymerization of an olefin in the presence of the olefin polymerization catalyst of claim 7.

9. A catalyst component produced by a process as claimed in any of claims 1 to 6.

**Patentansprüche**

1. Verfahren zur Herstellung einer Olefinpolymerisationskatalysatorkomponente, umfassend

a) Halogenieren einer Magnesiumverbindung der Formel MgR′R″, worin R′ eine Alkoxid- oder Aryloxidgruppe ist und R″ eine Alkoxid oder Aryloxidgruppe oder Halogen bedeutet, mit einem 4-wertigen Titanhalogenid in Gegenwart eines Halogenkohlenwasserstoffes und eines Elektronendonators unter Ausbildung eines halogenierten Produktes;

b) In-Berührung-Bringen dieses halogenierten Produktes mit Thionylchlorid oder mit einem Säurehalogenid der Formel

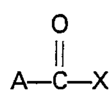

worin A eine Alkyl-, Aryl-, substituierte Alkyl- oder substituierte Arylgruppe bedeutet und X ein Halogen darstellt, bei einer Temperatur von etwa 40 bis etwa 140°C;

c) In-Berührung-Bringen dieses halogenierten Produktes mit einem 4-wertigen Titanhalogenid bei einer Temperatur von etwa 40 bis etwa 140°C, und zwar entweder gleichzeitig mit dem oder im Anschluß an das In-Berührung-Bringen in Stufe b).

2. Verfahren nach Anspruch 1, worin die Magnesiumverbindung ein Magnesiumdialkoxid ist.

3. Verfahren nach Anspruch 1, worin der Halogenkohlenwasserstoff ein Chlorkohlenwasserstoff ist.

4. Verfahren nach Anspruch 1, worin das Säurehalogenid ein Säurechlorid ist.

5. Verfahren nach Anspruch 1, worin der Elektronendonator ein aromatischer Carbonsäureester ist.

6. Verfahren nach Anspruch 1, worin die Magnesiumverbindung Magnesiumdiethoxid ist, der Halogenkohlenwasserstoff Chlorbenzol ist, das Titanhalogenid Titantetrachlorid ist, der Elektronendonator Ethylbenzoat ist und das Säurechlorid Benzoylchlorid ist.

7. Olefinpolymerisationskatalysator-Zusammensetzung, umfassend eine aluminiumorganische Verbindung, einen Elektronendonator und die nach einem Verfahren, wie in einem der Ansprüche 1 bis 6 beansprucht, hergestellte Katalysatorkomponente, worin das Atomverhältnis von Aluminium zu Titan von 30:1 bis 80:1 beträgt.

8. Verfahren zur katalytischen Polymerisation eines Olefins in Gegenwart eines Olefinpolymerisationskatalysators nach Anspruch 7.

9. Katalysatorkomponente, hergestellt nach einem Verfahren, wie in einem der Ansprüche 1 bis 6 beansprucht.

**Revendications**

1. Un procédé de production d'un composant de catalyseur de polymérisation d'oléfines comprenant

a) l'halogénation d'un composé du magnésium de la formule MgR′R″ où R′ est un groupe alcoolate ou arylate et R″ est un groupe alcoolate ou arylate ou un halogène, avec un halogénure du titane tétravalent en présence d'un halohydrocarbure et d'un donneur d'électrons, de manière à former un produit halogéné;

b) la mise en contact de ce produit halogéné avec du chlorure de thionyle ou avec un halogénure d'acide de la formule

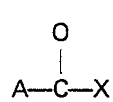

où A est un groupe alcoyle, aryle, alcoyle substitué ou aryle substitué et X est un halogénure à une température d'environ 40 à environ 140°C;

c) la mise en contact de ce produit halogéné avec un halogénure du titane tétravalent à une température d'environ 40 à environ 140°C, simultanément avec l'étape de mise en contact b) ou après cette dernière.

2. Un procédé selon la revendication 1, dans lequel le composé du magnésium est un dialcoolate de magnésium.

3. Un procédé selon la revendication 1, dans lequel l'halohydrocarbure est un chlorohydrocarbure.

4. Un procédé selon la revendication 1, dans lequel l'halogénure d'acide est un chlorure d'acide.

5. Un procédé selon la revendication 1, dans lequel le donneur d'électrons est un ester d'acide carboxylique aromatique.

6. Un procédé selon la revendication 1, dans lequel le composé du magnésium est du diéthylate de magnésium, l'halohydrocarbure est du chlorobenzène, l'halogénure de titane est du tétrachlorure de titane, le donneur d'électrons est du benzoate d'éthyle et le chlorure d'acide est du chlorure de benzoyle.

7. Une composition catalytique pour polymérisation d'oléfines comprenant un composé organoaluminium, un donneur d'électrons et le composant de catalyseur produit par un procédé selon une quelconque des revendications 1 à 6, dans laquelle le rapport atomique de l'aluminium au titane est compris entre 30:1 et 80:1.

8. Un procédé pour la polymérisation catalytique d'une oléfine en présence du catalyseur de polymérisation d'oléfines de la revendication 7.

9. Un composant de catalyseur produit par un procédé selon l'une quelconque des revendications 1 à 6.